# EUROPEAN PATENT SPECIFICATION

(11) **EP 3 081 364 B1**
(45) Date of publication and mention of the grant of the patent: **11.04.2018**
(21) Application number: 16165142.7
(22) Date of filing: 13.04.2016
(51) Int. Cl.: B29C 47/08, B29C 64/106, B29C 64/209, B33Y 30/00

(54) **EXTRUDER SYSTEM FOR ADDITIVE MANUFACTURING**
EXTRUDERSYSTEM ZUR ADDITIVEN FERTIGUNG
SYSTÈME D'EXTRUSION POUR LA FABRICATION ADDITIVE

(30) Priority: 14.04.2015 US 201562147051 P
(43) Date of publication of application: 19.10.2016
(73) Proprietor: Flexi Matter Ltd., 7685000 Meishar (IL)
(72) Inventor: MESHORER, Yishai, 7685000 Meishar (IL); VASILEVSKI, Alexander, 9772925 Jerusalem (IL)
(74) Representative: Pearl Cohen Zedek Latzer Baratz UK LLP

(56) References cited:
- EP-A1- 2 191 956
- EP-A1- 2 266 782
- CN-U- 203 496 288
- CN-U- 204 160 774

## Description

### FIELD AND BACKGROUND OF THE INVENTION

The present invention, in some embodiments thereof, relates to extrusion additive manufacturing and, more particularly, but not exclusively, to an extruder system for additive manufacturing and uses thereof

An extrusion-based additive manufacturing system builds a three-dimensional object from a digital representation of the 3D object in a layer-by-layer manner by extruding a flowable modeling material. The modeling material is extruded through an extrusion tip carried by an extrusion head on a support platform in an x-y plane. The extruded modeling material fuses to previously deposited layer of modeling material, and solidifies when cooled off.

Movement of the extrusion head with respect to the support platform is performed under computer control, in accordance with build data that represents the 3D object. The build data is obtained by initially slicing the digital representation of the 3D object into multiple horizontally sliced layers. Then, for each sliced layer, the host computer generates a build path for depositing modeling material to form the 3D object.

The extrusion head extrusion-based additive manufacturing systems includes a smooth cylindrical barrel fitted with an extruder screw having helical channels such that rotation of the screw advances the modeling material toward a discharge nozzle at the tip of the extrusion head. The modeling material extrusion head is heated by means of a heater that is in thermal contact with the barrel.

CN 203496288 describes a sugar-based rapid prototyping nozzle device that includes a cylinder, a melting chamber and a nozzle arranged in series. A drive module drives a screw conveyor-extrusion module.

### SUMMARY OF THE INVENTION

According to an aspect of some embodiments of the present invention there is provided an extruder system for additive manufacturing, the extruder system comprising: a heatable elongated barrel having a nozzle at a tip thereof; an extrusion screw mounted coaxially and rotatably in the barrel, such that upon rotation of the screw in the barrel an additive manufacturing building material is advanced in the barrel towards the tip; the screw having therein an axial bore; and at least one elongated mechanical member for controllably varying at least one of an amount and a type of material extruded through the nozzle, the elongated mechanical member including a tubular element, arranged coaxially within the bore and being axially movable therein to controllably engage and disengage the nozzle.

According to some embodiments of the invention the tubular element comprises at least one opening formed in a wall thereof, to allow building material advanced by the screw to enter the tubular element through the at least one opening, so that when the tubular element engages the nozzle, the nozzle is fed by building material from the tubular element.

According to some embodiments of the invention when the tubular element is disengaged from the nozzle, the nozzle is fed by building material bypassing the tubular element.

According to some embodiments of the invention the tubular element is configured to guide additive material to move within the tubular element into the nozzle, and to allow building material advanced by the screw to bypass the tubular element and also to exit through the nozzle, thereby to combine the additive material and the building material.

According to some embodiments of the invention the system comprises a locomotion device for conveying the additive material through the tubular element.

According to some embodiments of the invention the locomotion device comprises a pump.

According to some embodiments of the invention the locomotion device comprises a pushing member introducible into the tubular element to push the additive material through the tubular element.

According to some embodiments of the invention the tubular element comprises a plurality of lumens for guiding a plurality of different types of additive materials therein.

According to some embodiments of the invention the tubular element comprises at least one valve for controlling at least one of an amount and a type of additive material guided into the nozzle.

According to some embodiments of the invention the system comprises a rotation device configured for rotating the nozzle about an axis of the barrel.

According to some embodiments of the invention the system comprises a rotation device configured for rotating the tubular element about an axis of the tubular element, relative to the barrel.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of additive manufacturing system having an extruder system;
FIG. 2A is a planar view of an extruder system, according to some embodiments of the present invention;
FIG. 2B is a cross-sectional view along the line A --- A taken in FIG. 2A, in embodiments of the invention in which the extruder system comprises a movable tubular element, showing the movable tubular element engaging the nozzle of the extruder system;
FIG. 2C is a fragmentary enlarged cross-sectional view of the section B taken in FIG. 2B, according to some embodiments of the present invention;
FIG. 3A is a cross-sectional view along the line A --- A taken in FIG. 2A, in embodiments of the invention in which the extruder system comprises a movable tubular element, showing the movable tubular element disengaged from the nozzle of the extruder system;
FIG. 3B is a fragmentary enlarged cross-sectional view of the section B taken in FIG. 3A, according to some embodiments of the present invention;
FIG. 4A is a cross-sectional view along the line A --- A taken in FIG. 2A, in embodiments not according to the invention in which the extruder system comprises rod fitted within a bore of a screw, showing the rod engaging the nozzle of the extruder system;
FIG. 4B is a fragmentary enlarged cross-sectional view of the section D taken in FIG. 4A,;
FIG. 5A is a cross-sectional view along the line A --- A taken in FIG. 2A, in embodiments not according to the invention in which the extruder system comprises rod fitted within a bore of a screw, showing the rod is disengaged from the nozzle of the extruder system;
FIG. 5B is a fragmentary enlarged cross-sectional view of the section B taken in FIG. 5A;
FIG. 6A is a cross-sectional view along the line A --- A taken in FIG. 2A, in embodiments of the invention in which the extruder system includes a tubular element that guides a fluid or foamed additive material;
FIG. 6B is a fragmentary enlarged cross-sectional view of the section B taken in FIG. 6A, according to some embodiments of the present invention;
FIG. 7A is a cross-sectional view along the line A --- A taken in FIG. 2A, in embodiments of the invention in which in which the extruder system includes a tubular element that guides a solid additive material;
FIG. 7B is a fragmentary enlarged cross-sectional view of the section C taken in FIG. 7A, according to some embodiments of the present invention;
FIG. 8A is a cross-sectional view along the line A --- A taken in FIG. 2A, in embodiments of the invention in which the extruder system includes a tubular element having a plurality of lumens for guiding a plurality of different types of additive materials therein;
FIG. 8B is a fragmentary enlarged cross-sectional view of the section B taken in FIG. 8A, according to some embodiments of the present invention;
FIG. 8C is a fragmentary enlarged cross-sectional view of the section D taken in FIG. 8B, according to some embodiments of the present invention;
FIG. 8D is a cross-sectional view along the line E --- E taken in FIG. 8A, according to some embodiments of the present invention;
FIG. 8E is a fragmentary enlarged cross-sectional view of the section F taken in FIG. 8D, according to some embodiments of the present invention;
FIG. 9A is a cross-sectional view along the line A --- A taken in FIG. 2A, in embodiments of the invention in which the extruder system comprises a rotation device;
FIG. 9B is a fragmentary enlarged cross-sectional view of the section B taken in FIG. 9A, according to some embodiments of the present invention;
FIG. 10 is a schematic illustration of an extruded contour having a core-shell structure; and
FIG. 11 is a flowchart diagram of a method suitable for additive manufacturing of a three-dimensional object, according to some embodiments of the present invention.

### DESCRIPTION OF SPECIFIC EMBODIMENTS OF THE INVENTION

The present invention, in some embodiments thereof, relates to extrusion additive manufacturing and, more particularly, but not exclusively, to an extruder system for additive manufacturing and uses thereof

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

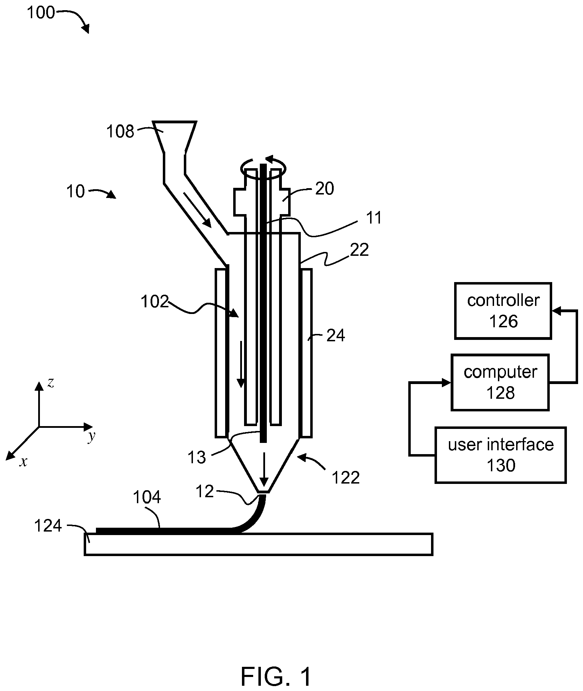

FIG. 1 is a schematic illustration describing an overview of extrusion additive manufacturing system **100,** according to some embodiments of the present invention. System **100** comprises an extruder system **10** for extruding contours **104** of building material onto a supporting platform **124** or onto previously extruded building material contours supported by supporting platform **124.**

Extruder system **10** can comprise a heatable elongated extrusion barrel **22** for holding the building material **102,** a motor-driven rotating screw **20** mounted coaxially and rotatably in barrel **22** for forcing the building material through extrusion barrel **22,** and a hollow tip **122** having a nozzle **12** through which the building material is extruded onto supporting platform **124** or onto a previously formed extruded layer. Upon rotation of screw **20** in barrel **22** an additive manufacturing building material is advanced in barrel **22** towards tip **122.**

System **10** can further comprise a feed hopper **108** for providing building material to extruder **10,** and a heater **24** for heating the building material in extrusion barrel **22.** The power to heater **24** is supplied by power line **25.**

Extruder system **10** is optionally and preferably designed in accordance with the building material being extruded.

As used herein "building material" encompasses both a material extruded to form the structure of the 3D object, and a support material which is extruded to support the 3D object, and which is thereafter removed as known in the art.

As used herein, "modeling material" refers to any material that constitutes the final object to be fabricated once all the building and post building operations are completed.

Representative examples of modeling materials that can be extruded by extruder system **10,** include, without limitation, a polymeric material, a wax material, a ceramic material, a metal, a metal alloy, composite material, material enforced by a fiber, such as, but not limited to, glass, carbon, wood, metal, and the like. The modeling material can be supplemented with an aqueous or non-aqueous binder and/or an additive such as, but not limited to, a viscosity modifier, a dispersant, and a lubricant. In some embodiments of the present invention extruder **10** extrudes only modeling material, and does not extrude any support material, throughout the fabrication of the object. In some embodiments, system 10 is devoid of any extruder that extrudes support material.

As used herein, "support material" refers to material that is dispensed to support the object being built and that is ultimately separated from the object in a post-build operation.

In various exemplary embodiments of the invention tip **122** of extruder system **10** has a diameter of from about 0.3 mm to about 50 mm, or about 0.3 mm to about 5 mm, or from about 20mm to about 50 mm.

For extruding the modeling material, the material is fed into extrusion barrel **22** where it is melted by heater **24** and pressurized to flow through tip **122** by means of rotating screw **20.**

System **100** also comprises a controller **126** operatively associated with a computer **128.** In some embodiments of the present invention system **100** further comprises computer **128.** Controller **126** receives slide data of an object to be fabricated from computer **128** and controls extruder system **10** to extrude contours of the modeling material thereby to form on supporting platform **124** a plurality of layers corresponding to the slice data. Controller **126** can communicate with any of the components of extruder system **10** and platform **124** via communication lines (not shown) or wirelessly.

System **100** can also comprise a user interface **130** for allowing the operator to provide various parameters as an input to system **100.**

Any of extruder system **10** and supporting platform **124** can be movable horizontally and/or vertically, so as to establish relative motion between extruder system **10** and platform **124,** wherein the horizontal motion facilitates the patterning of the individual layers, and the vertical motion facilitates the buildup of the layers on top of each other as known in the art. Thus, for example, in some embodiments extruder system **10** is static and supporting platform **124** is movable both horizontally and vertically, in some embodiments extruder system **10** is movable both horizontally and vertically and supporting platform **124** is static, in some embodiments both extruder system **10** and supporting platform **124** are movable both horizontally and vertically (for example, in opposite directions), in some embodiments extruder system **10** is movable horizontally and supporting platform **124** is movable vertically, in some embodiments extruder system **10** is movable both horizontally and vertically, and supporting platform **124** is movable only vertically, in some embodiments extruder system **10** is movable vertically and supporting platform **124** is movable horizontally, and in some embodiments extruder system **10** is movable only vertically and supporting platform **124** is movable both horizontally and vertically. The relative motion between extruder system **10** and platform **124** is controlled by controller **126** based on slice data received by controller **126** from computer **128.**

The operation of system **100** is based on slice data that is typically received as a data file containing three-dimensional contour coordinates which define a plurality of planes corresponding to planar slices of the object, such that the overall shape of the object is described by the slices. Typically, the data file is in a format that is readable by the controller of the system. Representative examples of computer readable formats suitable for the present embodiments include, without limitation, STL, DWG/DXF, IDEAS, IGES, and VRML. The data file can be processed, preferably by computer **128,** wherein the processing may include various operations, including, without limitation, updating of vertical coordinates, updating of horizontal coordinates, ordering and reordering of contours, updating extrusion paths, and the like. Representative examples of processing techniques are described hereinunder. Once the data file is processed, the slice data are transferred from computer **128** to controller **126,** which controls the operation of extruder system **10,** and optionally also platform **124.** Controller **126** signals extruder system **10** to extrude the modeling material onto platform **212** and also signals at least one of extruder system **10** and platform **124** to move along the vertical and horizontal direction, according to the slice data.

FIG. 1 also shows a three-dimensional Cartesian coordinate system, defining an x direction a y direction and a z direction. Herein, "vertical direction" refers to a direction which is parallel or anti-parallel to the z direction, and a "horizontal direction" refers to any direction parallel to or in the x-y plane.

In various exemplary embodiments of the invention screw **20** has therein an axial bore **11** configured for receiving one or more elongated mechanical members **13** for controllably varying the amount and/or type of the material extruded through nozzle **12.**

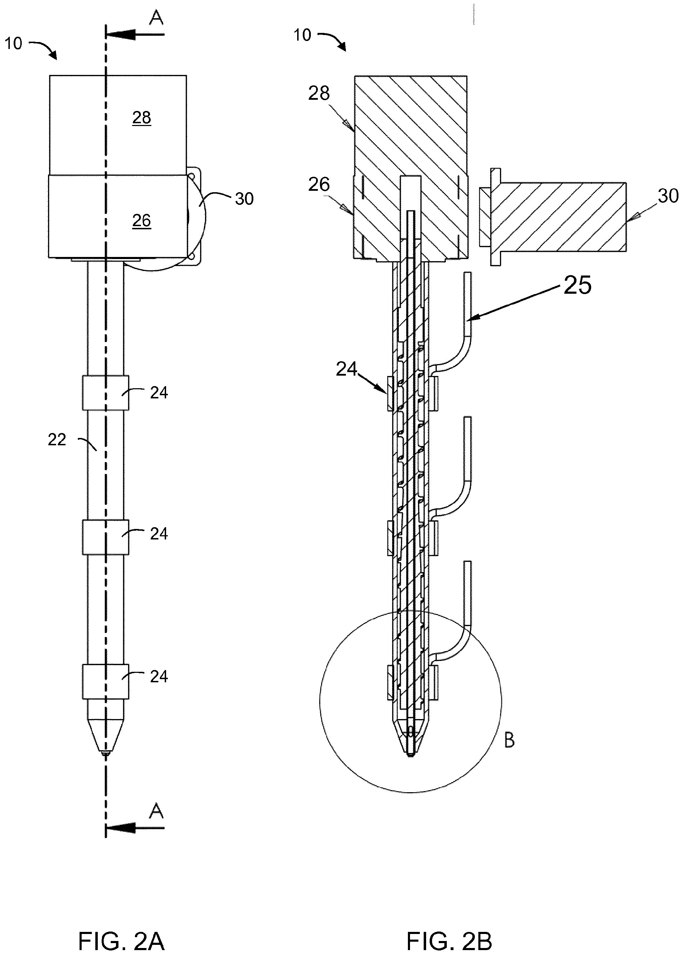

Referring conjointly to FIGs. 2A-9B, extruder system **10** optionally and preferably comprises a motor **30** for rotating the screw **20,** preferably by means of a transmission gear **26,** and an extruder controller **28** that controls the operations of screw **20** and other components of the extruder system (*e.g.,* the elongated mechanical member) as described herein. Preferably, extruder controller **28** communicates with the controller **126** of the additive manufacturing system **100,** wherein controller **126** transmits operation signals to extruder controller **28** based on the slice data and the additive manufacturing procedure. Alternatively, controller **126** can directly control also the components of extruder system **10,** in which case in is not necessary for system **10** to include a controller. Still alternatively, controller **28** can directly control also the relative motion between extruder system **10** and platform **124,** and directly receive data from computer **128** in which case in is not necessary for system **100** to include controller **126.**

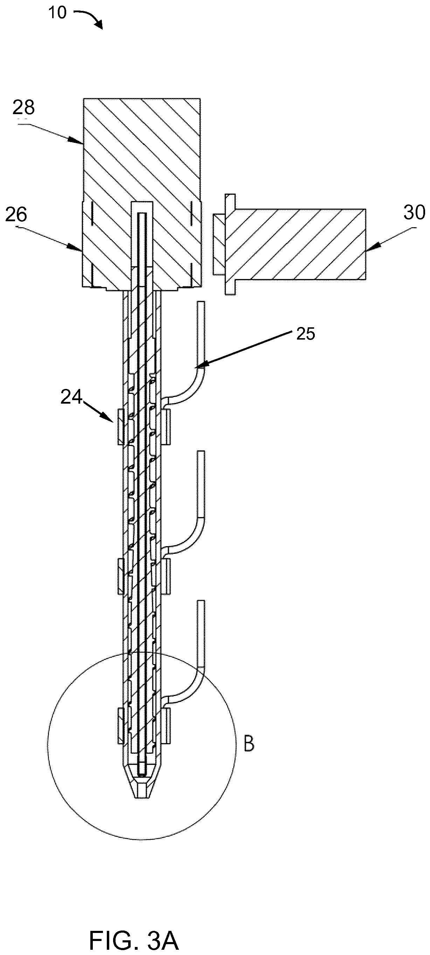

A planar view of an extruder system according to various exemplary embodiments of the present invention is illustrated in FIG. 2A. FIGs. 2B-C and 3A-B are schematic illustrations of extruder system **10** in embodiments of the invention in which the elongated mechanical member **13** comprises a tubular element **16** arranged coaxially within bore **11.** Tubular element **16** has an outer wall sizewise compatible with the inner wall of bore **11.** Optionally and preferably the outer wall of tubular element **16** is generally cylindrical, and in some embodiments the distal end (downstream the extrusion direction) of the outer wall of tubular element **16** is tapered.

In some embodiments of the present invention tubular element **16** has a thermally isolating wall, and in some embodiments of the present invention tubular element **16** has a thermally conductive. When the wall of tubular element **16** is thermally isolating, the thermal conductance of the wall of tubular element **16** is less than the thermal conductance of the wall of extrusion barrel **22,** and when the wall of tubular element **16** is thermally conductive, the thermal conductance of the wall of tubular element **16** is generally the same (*e.g.*, within 10%) or above the thermal conductance of the wall of extrusion barrel **22.** A thermally isolating tubular element is typically useful in embodiments in which an additive material is introduced into tubular element, as further detailed hereinbelow, and it is desired not to overheat the additive material. A thermally conductive tubular element is typically useful in embodiments in which a liquefiable building material is allowed to enter tubular element **16,** *e.g.,* through one or more openings **18** formed in the wall of tubular element **16,** as further detailed hereinbelow.

In various exemplary embodiments of the invention tubular element **16** is axially movable in bore **11** to controllably engage (FIGs. 2B-C) and disengage (FIGs. 3A-B) nozzle **12.** The motion of tubular element **16** is optionally and preferably controlled by extruder controller **28.**

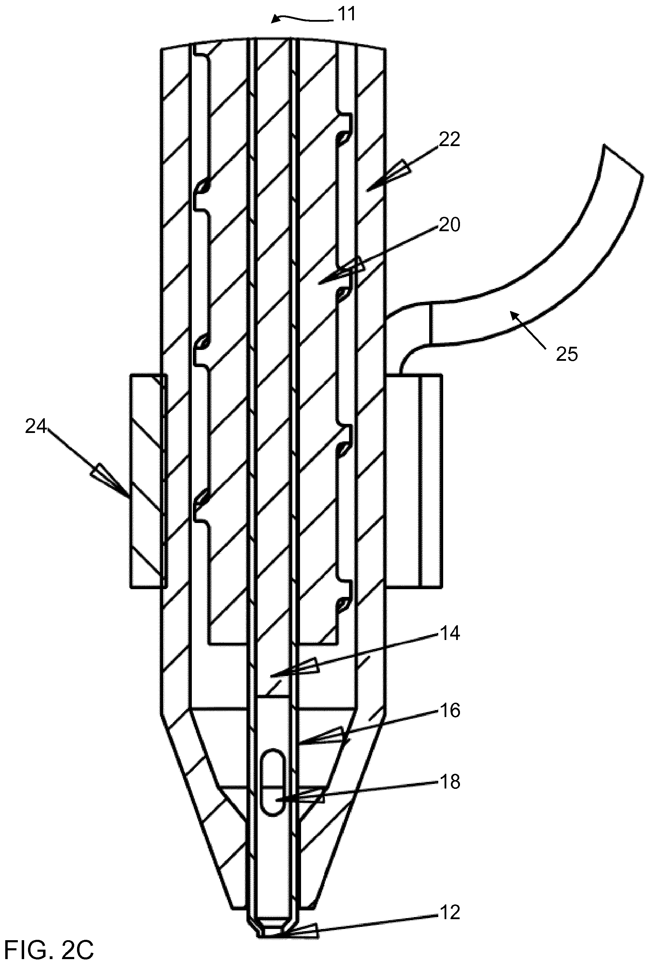

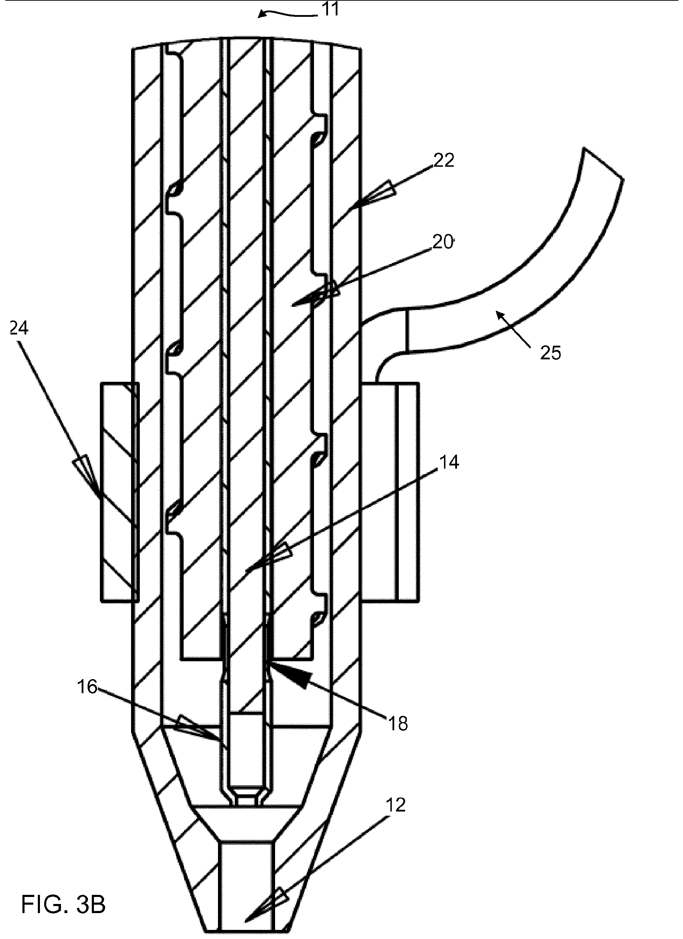

In some embodiments of the present invention tubular element **16** comprises one or more openings **18** formed in a wall of tubular element **16.** Opening(s) **18** serve for allowing a building material advanced by screw **20** to enter tubular element **16** through opening **18.** When tubular element **16** engages nozzle **12** (FIGs. 2B and 2C) nozzle **12** is fed by building material from tubular element **16,** and when tubular element **16** is disengaged from nozzle **12** (FIGs. 3A and 3B) nozzle **12** is fed by building material that advances outside tubular element **16** and bypasses tubular element **16** into nozzle **12.**

The advantage of having a movable tubular element within bore **11** is that is allows controlling the amount of building material that is extruded through nozzle **12.** This can be done in more than one way. In some embodiments, the size of opening(s) **18** is less than the aperture size of nozzle **12,** so that when tubular element **16** engages nozzle **12,** less amount of building material exits through nozzle **12.** In these embodiments, tubular element **16** is tightly fitted to nozzle **12** so that upon engagement of tubular element **16** into nozzle **12,** only building material that is advanced through tubular element **16** enters nozzle **12,** while building material that advances outside tubular element **16** is prevented from entering nozzle **12.**

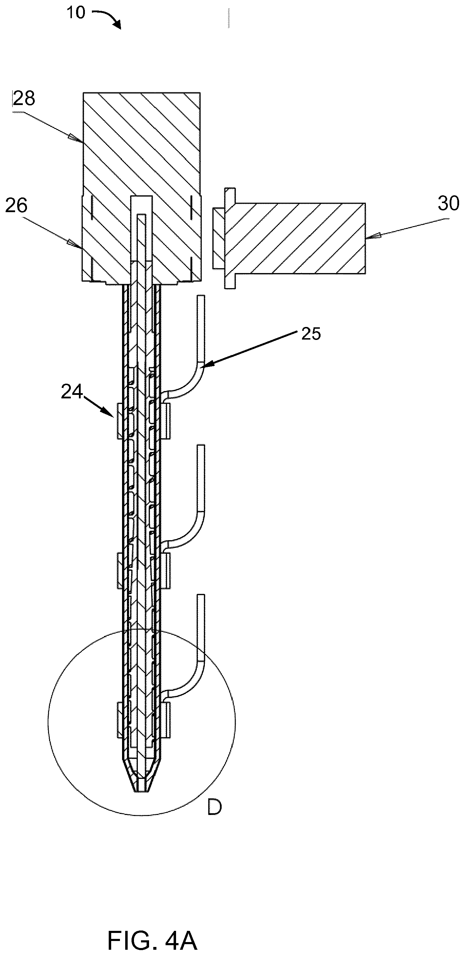

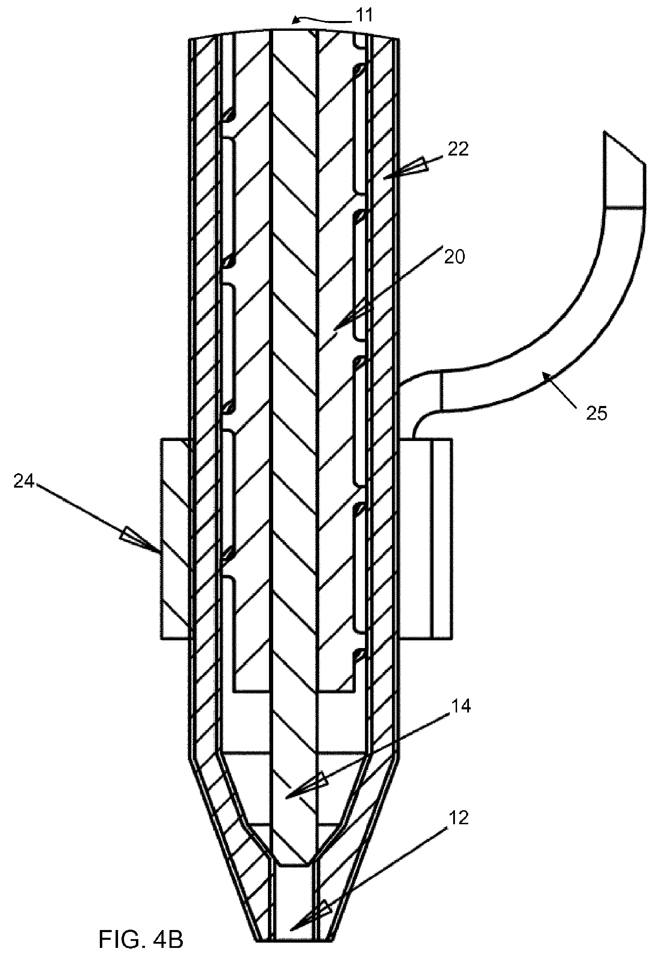

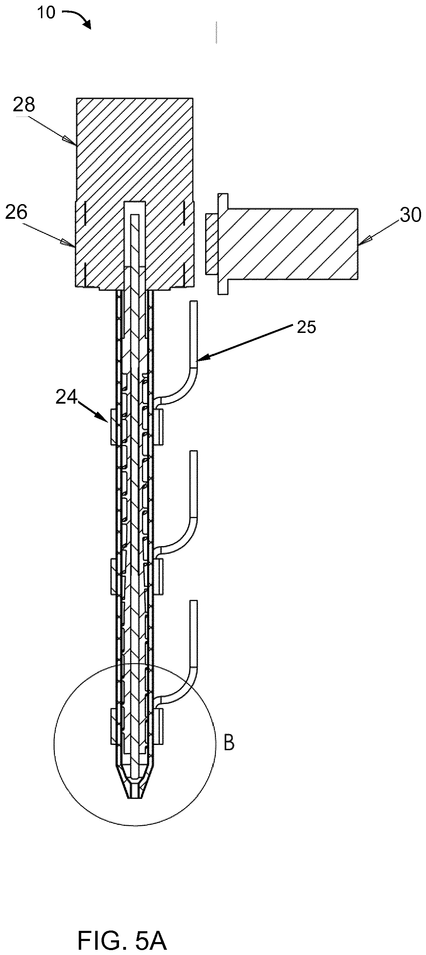

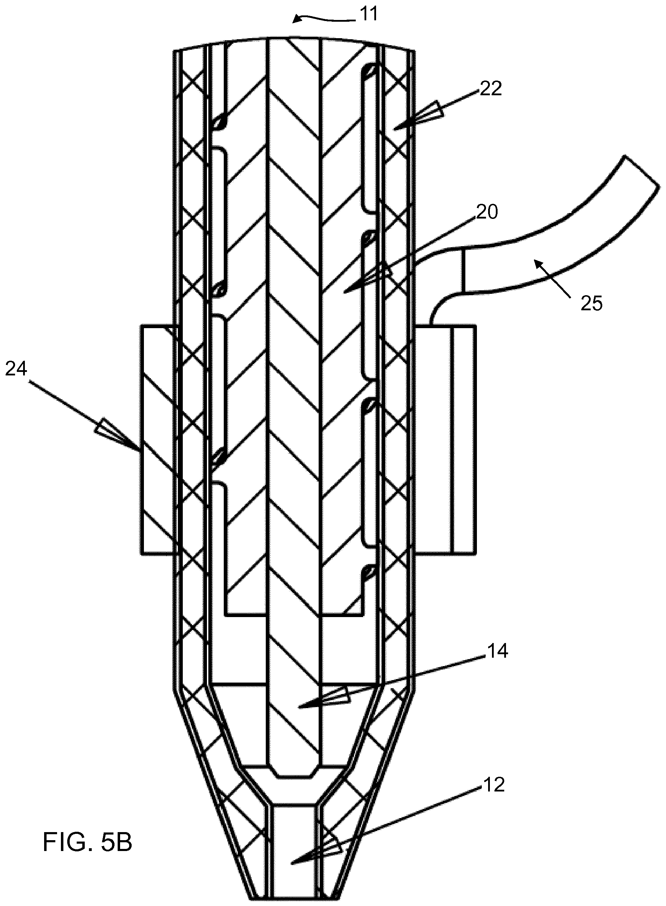

In some embodiments, not in accordance with the invention, extruder system **10** comprises a rod **14** fitted within tubular element **16.** Rod **14** is optionally and preferably axially movable in tubular element **16** and over opening(s) **18.** Rod **14** serves as a valve that controls the amount of building material flowing through opening **18.** In the illustration shown in FIGs. 2B-C, rod **14** is in an upper position relative to opening(s) **18** so that opening(s) **18** is/are fully open. In the illustration shown in FIGs. 3A-B, rod **14** covers opening(s) **18** so that opening(s) **18** is/are closed and building material does not enter tubular element **16.** Positions of rod **14** in which rod **14** partially closes opening(s) **18** are also contemplated. Embodiments not according to the invention also contemplate configurations in which extruder system **10** does not include a movable tubular element such as element **16.** Representative examples of these embodiments are illustrated in FIGs. 4A-B and 5A-B which are cross-sectional views along the line A --- A taken in FIG. 2A, in embodiments of the invention in which the elongated mechanical member **13** comprises rod **14.** Rod **14** is optionally and preferably fitted within bore **11** and is axially movable within bore **11** to controllably engage (FIGs. 4A-B) and disengage (FIGs. 5A-B) nozzle **12.** When rod **14** is disengaged and away from nozzle **12** (for example, above tip **122)** building material is allowed to exit through nozzle **12.** For a given rotation speed of screw **20,** the amount of building material that enters nozzle **12** is reduced as rod **14** advances towards nozzle **12** due to the space occupied by rod **14.** Preferably, when rod **14** engages nozzle **12** no building material exits through nozzle **12.**

The motion of rod **14** is optionally and preferably controlled by extruder controller **28.**

The control over the amount of building material that exits nozzle **12** depends on several parameters such as the rotation speed of screw **20,** the position of rod **14** (if exists) and/or the position of tubular element **16** (is exists). In various exemplary embodiments of the invention two or more of these parameters are synchronized, optionally and preferably by extruder controller **28.** Typically, the rotation speed of screw **20** is synchronized with at least one of the position of rod **14** and the position of tubular element **16.** For example, when the rotation speed of screw **20** is reduces, rod **14** and/or tubular element **16** are repositioned to reduce the amount of building material that is extruded. When the rotation speed of screw **20** is increased, rod **14** and/or tubular element **16** are preferably repositioned to increase the amount of building material that is extruded.

The synchronization is optionally and preferably also with respect to the additive manufacturing protocol. For example, while moving extruder system **10** to a starting point of a contour, controller **126** can signal extruder controller **28** to bring rod **14** and/or tubular element **16** to a position in which no building material exits nozzle **12.** Once tip **122** is accurately located above the starting point of the contour, controller **126** can signal extruder controller **28** to begin the extrusion process, in which case extruder controller **28** can establish the rotation of screw **20** *(e.g.,* by controlling motor **30** and/or gear **26),** and retract rod **14** and/or tubular element **16** to allow the building material to exit nozzle **12** at an amount that is preselected for the starting point of the contour. While the contour is extruded, extruder controller **28** can vary the amount of extruded material, if desired. Such variation can be executed so as to vary the thickness of the contour and/or responsively to the speed of extruder system **10** relative to tray **124.** Upon reaching the end point of a contour, controller **126** can signal system **10** and/or tray **124** no to move one with respect to the other, and also signal extruder controller **28** to reduce the rotation speed of screw **20,** and to advance at least one of rod **14** and/or tubular member towards nozzle **12.**

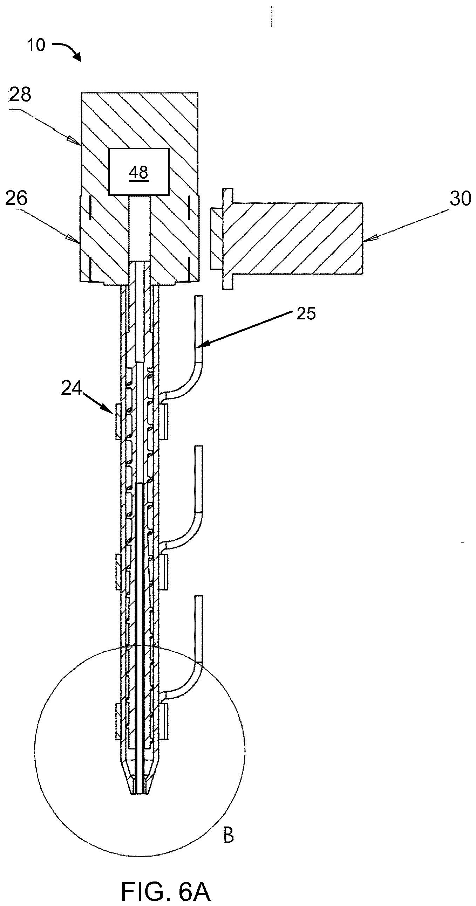

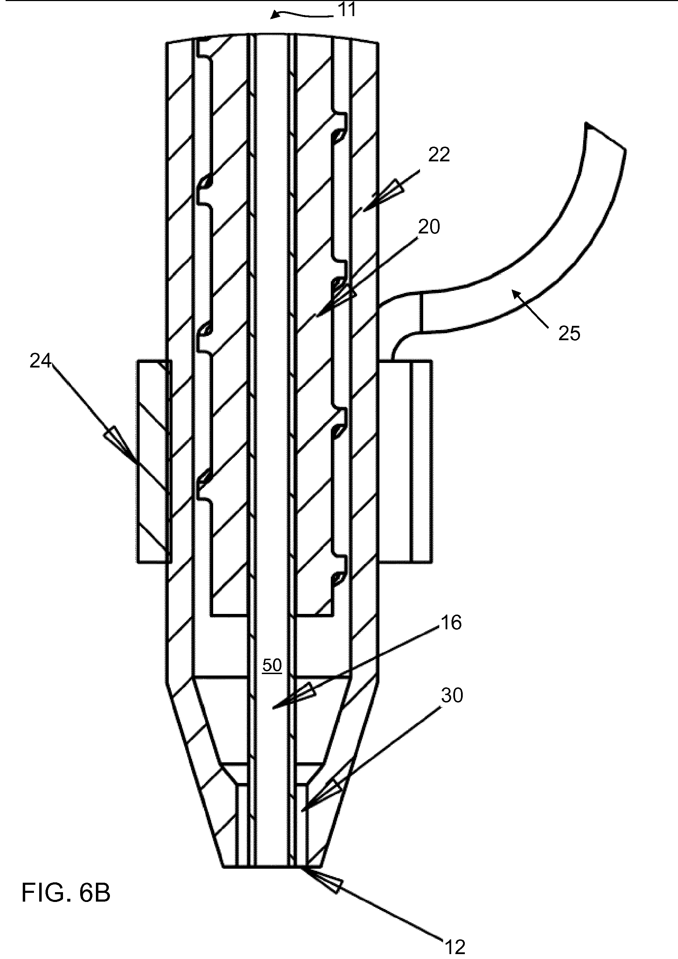

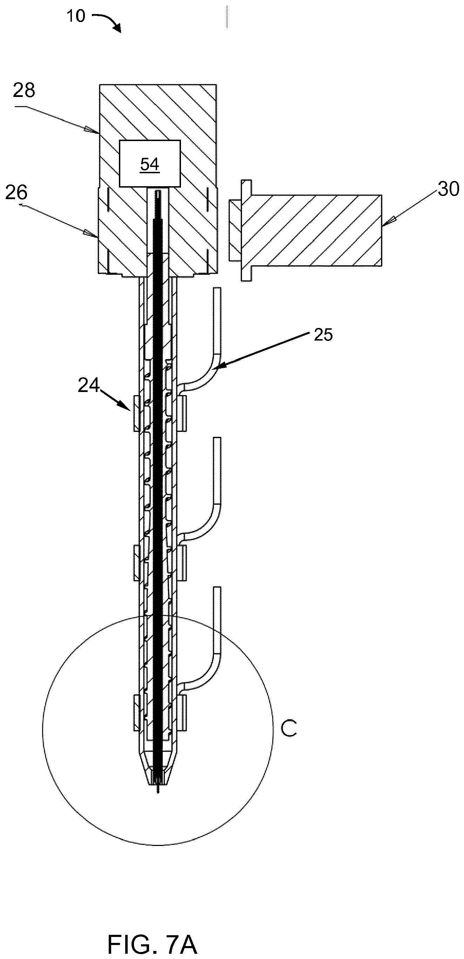

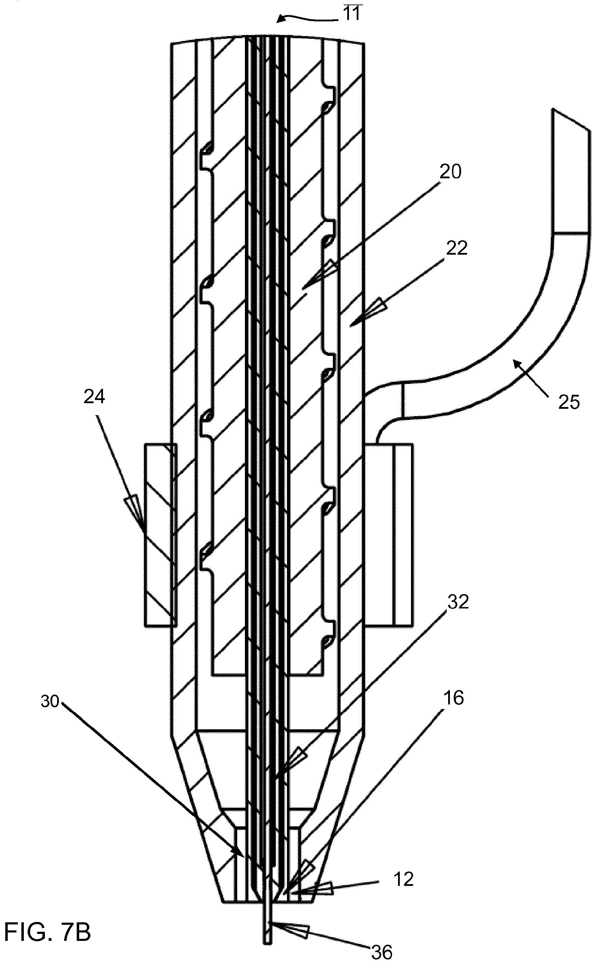

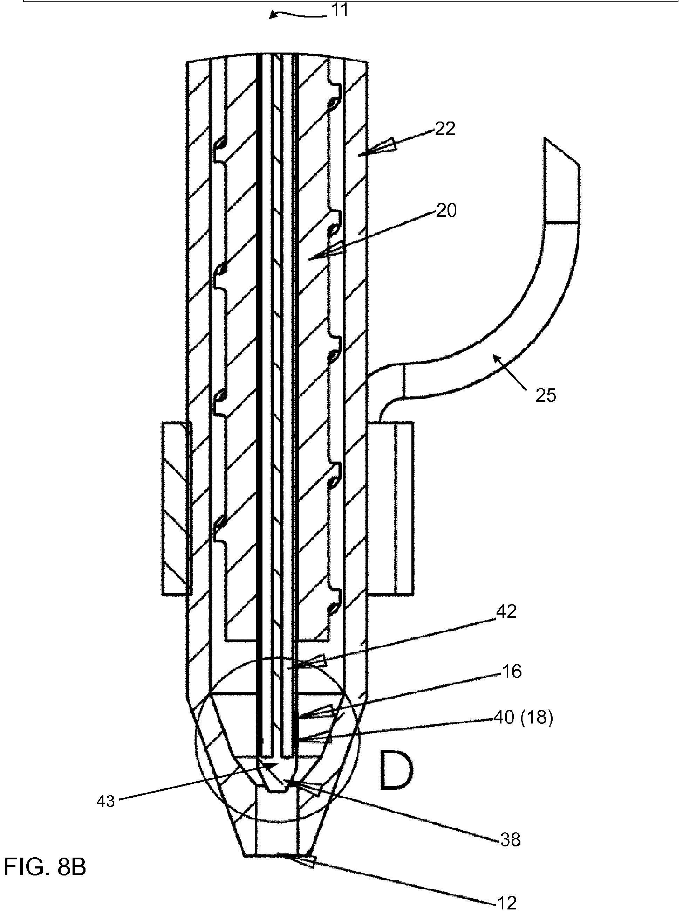

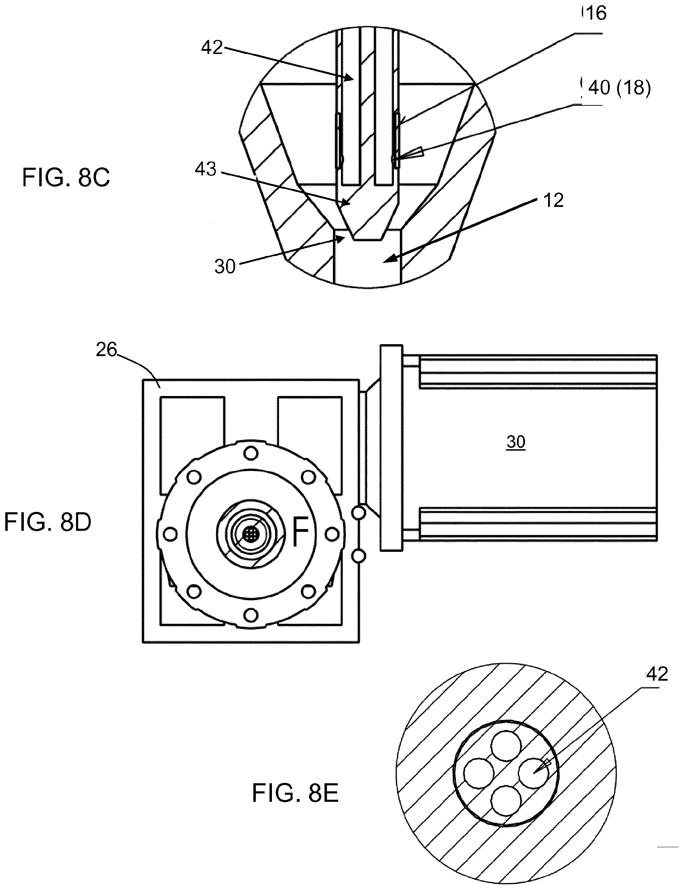

FIGs. 6A-B and 7A-B are schematic illustrations of extruder system **10** is embodiments of the invention in which tubular element **16** guides an additive material to move within tubular element **16** into nozzle **12.** These embodiments are particularly useful in situations in which it is desired to produce contours that combine two or more different type of materials. In these embodiments, tubular element **16** may or may not be movable. Preferably, the outer diameter of tubular element **16** in these embodiments is smaller than the inner diameter of nozzle **12** such that when tubular element **16** engages nozzle **12** there is a gap **30** between the outer wall of tubular element **16** and the inner wall of nozzle **12.** Alternatively, tubular element **16** may be tapered at its distal end, in which case the tapered can engage nozzle **12** so as to form the gap. This alternative is not shown in FIGs. 6A-B and 7A-B, but a tapered tubular element is illustrated in FIG. 8B, and one of ordinary skills in the art, provided with the details described herein would know how to apply such a configuration also to the configuration shown in FIGs. 6A-B and 7A-B.

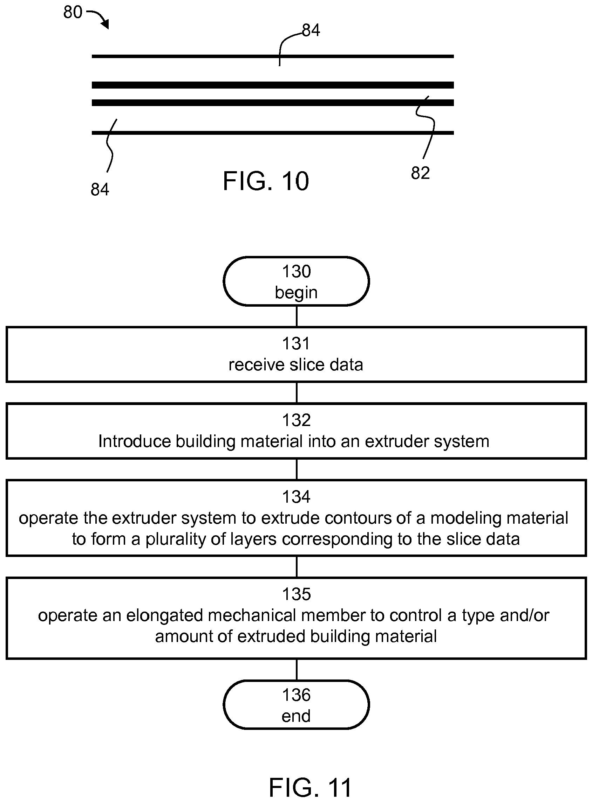

The building material that is advanced by screw **20** bypasses tubular element **16** at gap **30** and exits through nozzle **12.** The additive material advances through tubular element **16** and also exits through nozzle **12,** such that the building material is combined with the additive material. In various exemplary embodiments of the invention the combination forms a core-shell structure, wherein the additive material constitutes core, and the building material constitutes the shell. A representative example of a contour having a core-shell structure is illustrated in FIG. 10, showing a contour **80** having a core **82** and a shell **84** surrounding core **82.**

The present embodiments contemplate many types of additive materials to be introduced into tubular element **16.** Representative example include, without limitation, fluid additive material (*e.g.*, a gaseous substance), foamed additive material, solid additive material (*e.g.*, a solid thread or a solid filament or a fibrous substance), pigment (*e.g.*, in the form of powder or liquid), and the like.

In some embodiments of the present invention extruder system **10** comprises a locomotion device that conveys the additive material through tubular element 16. The type of the locomotion device can be selected based on the type of additive material that is contemplated. For example, when the additive material is a flowable additive material **50** *(e.g.,* a gaseous substance, a foam, a powder, a liquid), the locomotion device can be a pump **48** that forces the additive material into tubular member **16.** These embodiments are illustrated in FIGs. 6A-B.

When the additive material is a solid additive material **36** *(e.g.,* a solid thread or filament or a fibrous substance), the locomotion device can comprise a pushing member **32** that is introduced into tubular element **16** to push the additive material through tubular element **16.** A representative example of this embodiment, which is not intended to be limiting, is illustrated in FIGs. 7A-B. In this example, pushing member **32** has the shape of a hollow rod having an inner diameter that is sizewise compatible with the outer diameter of material **36** so that material **36** can be introduced into the rod **32,** typically while both material **36** and rod **32** are outside extruder system **10.** Preferably, material **36** protrudes outwardly from rod **32.** Thereafter, rod **32,** now holding material **36,** is introduced into tubular element **16** wherein rod **32** is advanced distally towards tip **122** to introduce material **36** into nozzle **12.** Rod **32** can be advanced manually or it can be motor-driven, in which case the locomotion device also includes a motor **54** (see FIG. 7A) that advances rod **32** in tubular element **16** towards nozzle **12.**

It is to be understood that it is not necessary for the additive material **36** to be in the form of a solid thread or filament or a fibrous substance in order to employ pushing member **32** as the locomotion device. Pushing member can be applied also when additive material **36** is flowable (*e.g.,* a powder, a liquid, a foam, *etc.*)*.*

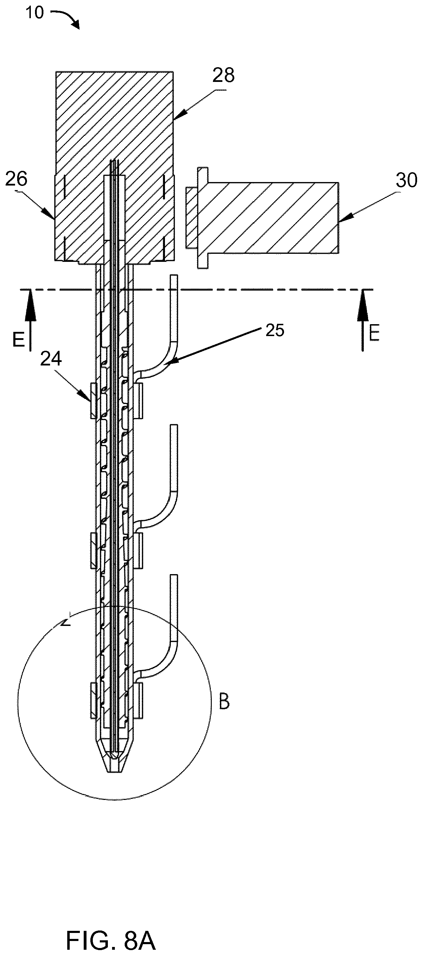

FIGs. 8A-E are schematic illustrations of extruder system **10** in embodiments of the invention is which tubular element **16** comprises a plurality of lumens **42** for guiding a plurality of different types of additive materials therein. In a representative example, each of lumens **42** can guide a different pigment material so as to allow extruder system **10** to vary the color of the extruded contours. The lumens can each individually extend until the distal end of tubular element **16** such that when tubular element **16** engages nozzle **12** each additive material (*e.g.*, pigment) arrives separately into nozzle **12.** In these embodiments the building material additive materials are preferably mixed thereamongst and also with the building material outside tubular element **16,** for example, in nozzle **12** or upon exiting out of nozzle **12.** Preferably, tubular element **16** is constructed to allow forming gap **30** outside tubular element **16** between the inner wall of nozzle **12** and the outer wall of tubular element **16,** as further detailed hereinabove (*e.g.*, by making tubular element **16** narrower or tapered at its distal end). This allows the building material to bypass tubular element **16** and mix with the additive materials in nozzle **12.**

Also contemplated are embodiments in which tubular element **16** extends throughout nozzle **12** (for example, by advancing tubular element **16** along the entire length of nozzle **12**, in embodiments in which tubular element **16** is movable, or by making tubular element **16** sufficiently long in embodiments in which tubular element **16** is not movable), while maintaining gap **30.** In these embodiments, the additives are combined thereamongst as well as with the building material upon extrusion. A particular application of these embodiments is to form a contour having a core-shell structure as illustrated in FIG. 10, wherein the combined additive materials constitute the core and the building material constitutes the shell.

Alternatively or additionally, two or more of lumens **42** can combine to a single lumen **43** within tubular element **16,** for example, at its distal end, as illustrated in FIGs. 8B and 8C. In these embodiments the additive materials of the respective lumens are mixed at lumen **43.** When tubular element **16** is provided with one or more opening(s) **18,** as described above with reference to FIGs. 2B-3B, opening(s) **18** are preferably upstream with respect to lumen **43** so as to allow the mixing within lumen **43** of the additive materials of the respective lumens as well as the building material that enters tubular element **16** through opening(s) **18.**

Further contemplated are combinations of the above embodiments. A representative example is an embodiment in which two or more of lumens **42** combine to a single lumen **43,** opening(s) **18** are formed upstream with respect to lumen **43,** and tubular element **16** extends throughout nozzle **12,** while maintaining gap **30.** In these embodiments, the additives are mixed thereamongst as well as with the building material within lumen **43.** Upon extrusion, the mixture formed in lumen **43** is combined with the building material that bypass tubular element **16** through gap **30.** A particular application of these embodiments is to form a contour having a core-shell structure as illustrated in FIG. 10, wherein the mixture of additive materials and building material constitute the core and the unmixed building material constitutes the shell.

In any of the above embodiments, when tubular element **16** is provided with one or more opening(s) **18,** the opening(s) **18** are optionally and preferably provided with a unidirectional valve **40,** for example, to allow the building material to enter tubular element **16** through opening(s) **18,** but prevent the additive material to exit tubular element **16** through opening(s) **18,** or vice versa. Optionally, valve **40** is controllable by extruder controller **28.**

In any of the above embodiments, the distal end of tubular element **16** is optionally and preferably provided with a controllable valve **38** so as to controllable allow or prevent exit of materials from tubular element **16.** Optionally, valve **38** is controllable by extruder controller **28.**

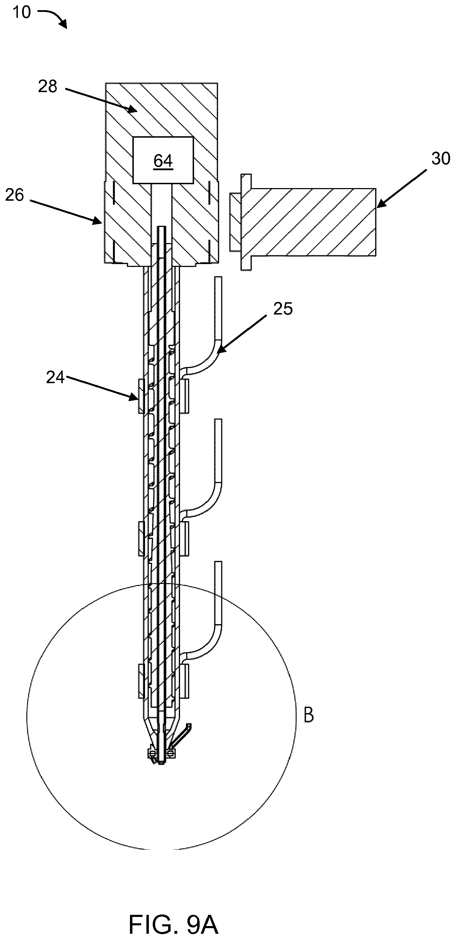

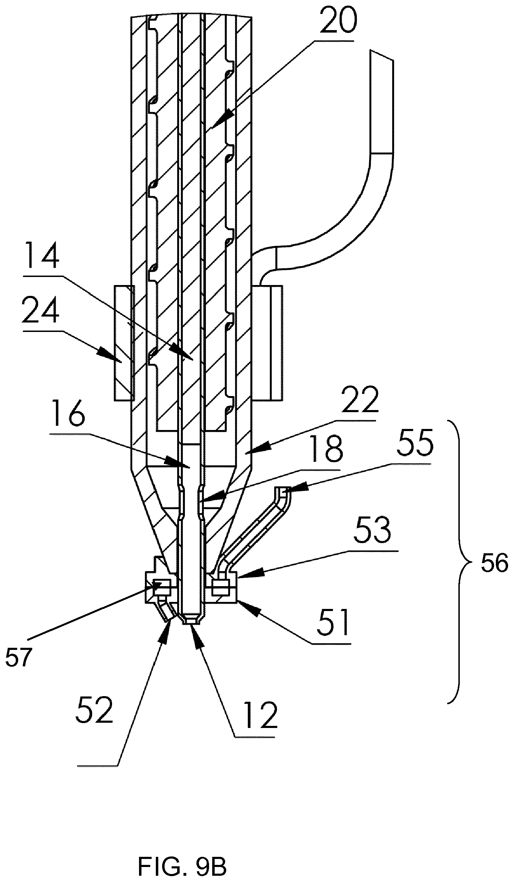

FIGs. 9A-B are schematic illustrations of extruder system **10** in embodiments of the invention in which extruder system **10** comprises a rotation for rotating nozzle **12** about an axis of barrel **22,** and/or for rotating tubular element **16** about its axis relative to barrel **22.** When nozzle **12** is rotated it can be rotated together with barrel **22,** or, more preferably, it can be rotatably mounted on barrel **22** so as to allow nozzle **12** to rotate relative to barrel **22.** When tubular element **16** is rotated it is preferably rotated independently of the rotation of screw **20.** The rotation of nozzle **12** and/or tubular element **16** is optionally and preferably established by means of a motor **64.** In some embodiments of the present invention motor **54** (see FIG. 7A) is also configured for establishing a rotary motion of nozzle **12** and/or tubular element **16,** in which case motor **54** replaces motor **64.**

Rotation of nozzle **12** and/or tubular element **16** is useful in applications in which the building material is combined with an additive material in a non-concentric manner (e.g., for reinforcing the contour or for decoration), and it desired to form a contour that is patterned by itself For example, when the building material is combined non-concentrically with a thread or a filament, nozzle **12** and/or tubular element **16** can be rotated to form a contour having a helical pattern of the thread or a filament.

Rotation of nozzle **12** and/or tubular element **16** can also be useful for facilitating a better attachment of the extruded contour to a previously extruded contour. In this embodiment, nozzle **12** or the distal end of tubular element **16** is provided with a welding or soldering device **56** that facilitates the attachment of the extruded contour to another surface such as a previously extruded contour. Soldering device **56** optionally and preferably includes a first member **53** and a second member **51** that are connected rotatably to each other. First member **53** can be mounted statically with respect to barrel **22,** so that when second member **51** rotates relative to first member **53** it also rotates relative to barrel **22.** Device **56** can include an inlet **55** connected to first member **53.** Inlet **55** can receive a gas or soldering medium for use during the soldering or welding. An outlet **52** for the gas or soldering medium is optionally and preferably mounted on second member **51,** such that a flow of the gas or soldering medium is generated by outlet **52** at the vicinity of nozzle **12.** Fluid communication between inlet **55** and outlet **52** can be ensured, for example, by means of an annular fluid channel **57** formed between first **53** and second **51** members of device **56.**

Typically, device **56** applies welding or soldering outwardly at an angle to the extrusion direction. In these embodiment, the rotation of nozzle **12** or the distal end of tubular element **16** is accompanied is by re-orientation of device **56** so as to allow applying the welding or soldering at a desired direction. The desired direction is typically selected by computer **128** or controller **126** based on the position of a previously applied contour relative to the position of extruder system **10.**

FIG. 11 is a flowchart diagram of a method suitable for additive manufacturing of a three-dimensional object, according to some embodiments of the present invention.

Selected operations of the methods described below can be embodied in many forms. For example, they can be embodied in on a tangible medium such as a computer (*e.g.*, computer **128)** for performing the method steps. They can be embodied on a computer readable medium, optionally and preferably non-transitory computer readable medium, comprising computer readable instructions for carrying out the operations. They can also be embodied in electronic device having digital computer capabilities arranged to run the computer program on the tangible medium or execute the instruction on a computer readable medium.

Computer programs implementing some of the operations described below can commonly be distributed to users on a distribution medium such as, but not limited to, a CD-ROM or a flash drive, or they can be provided via a communication network, such as, but not limited to, the internet. From the distribution medium, the computer programs can be copied to a hard disk or a similar intermediate storage medium. The computer programs can be run by loading the computer instructions either from their distribution medium or their intermediate storage medium into the execution memory of the computer, configuring the computer to act in accordance with one or more operations of the method of the present embodiments. All these operations are well-known to those skilled in the art of computer systems.

It is to be understood that, unless otherwise defined, the operations described hereinbelow can be executed either contemporaneously or sequentially in many combinations or orders of execution. Specifically, the ordering of the flowchart diagrams is not to be considered as limiting. For example, two or more operations, appearing in the following description or in the flowchart diagrams in a particular order, can be executed in a different order *(e.g.,* a reverse order) or substantially contemporaneously. Additionally, several operations described below are optional and may not be executed.

The method begins at **130** and continues to 131 at which slice data are received. The slice data can be received from a local computer (e.g., computer **128)** connected to an extrusion additive manufacturing system, such as, but not limited to, system **100** that is configured for receiving the slice data and executing the method. Alternatively, the slice data can be received from a remote computer that communicates with the system over a communication network, such as, but not limited to, a local network or the internet.

At **133** a building material is introduced into an extruder system, such as, but not limited to, extruder system **10.** At **134** the extruder system is operated to extrude contours of a modeling material to form a plurality of layers corresponding to slice data of the object, and at **135** an elongated mechanical member, such as, but not limited to, elongated member **13** is operated to vary the type and/or amount of extruded building material. **134** and **135** are preferably executed simultaneously.

The method ends at **136.**

Operation **135** can be executed in more than one way. In some embodiments of the present invention the elongated member is a tubular element such as, but not limited to, tubular element **16,** and the method controls tubular element **16** to engage and disengage the nozzle of the extruder system, as further detailed hereinabove. In some embodiments of the present invention the tubular element comprises at least one opening formed in a wall thereof, and the mechanical member also comprises a rod, such as, but not limited to, rod **14,** fitted within the tubular element. In these embodiments the method controls the amount of building material flowing through the opening(s) by moving the rod over the opening(s). In some embodiments of the present invention the method disengages the tubular element from the nozzle, to allow the nozzle to be fed by building material bypassing the tubular element.

In some embodiments the rod is fitted within the bore of the screw, and the method controls the rod to engage and disengage said nozzle, as further detailed hereinabove.

In some embodiments of the present invention the method introduces an additive material into the tubular element to move within the tubular element into the nozzle, thereby controlling the type of extruded material by combining the additive material with the building material as further detailed hereinabove. The additive material can be of any of the types described above. In some embodiments of the present invention the method forms an extruded contour having a core-shell structure, as further detailed hereinabove. When the tubular element has a plurality of lumens, the method optionally and preferably introduces different types of additive materials to at least two separate lumens.

In some embodiments of the present invention the method rotates the nozzle about an axis of the barrel, and in some embodiments of the present invention the method rotates the tubular element about its axis relative to the barrel.

## Claims

1. An extruder system for additive manufacturing, the extruder system comprising:
a heatable elongated barrel (22) having a nozzle (12) at a tip (122) thereof; and
an extrusion screw (20) mounted coaxially and rotatably in said barrel, such that upon rotation of said screw in said barrel an additive manufacturing building material is advanced in said barrel towards said tip;
said screw having therein an axial bore (11); and
at least one elongated mechanical member (13) for controllably varying at least one of an amount and a type of material extruded through said nozzle, **characterized in that** said at least one elongated mechanical member comprises a tubular element (16) arranged coaxially within said bore and being axially movable therein to controllably engage and disengage said nozzle.

2. The system of claim 1, wherein said tubular element comprises at least one opening (18) formed in a wall thereof, to allow building material advanced by said screw to enter said tubular element through said at least one opening, so that when said tubular element engages said nozzle, said nozzle is fed by building material from said tubular element.

3. The system according to claim 2, wherein said at least one mechanical member comprises a rod (14) fitted within said tubular element and being axially movable therein and over said_at least one opening to control an amount of building material flowing through said at least one opening.

4. The system according to any of claims 1-3, wherein when said tubular element is disengaged from said nozzle, said nozzle is fed by building material bypassing said tubular element.

5. The system according to claim 1, wherein said tubular element comprises a plurality of lumens (42) for guiding a plurality of different types of additive materials therein.

6. The system according to claim 1, wherein said tubular element comprises at least one valve (38) for controlling at least one of an amount and a type of additive material guided into said nozzle.

## Patentansprüche

1. Ein Extrudersystem für die Zusatzstoff-Herstellung, das Extrudersystem umfassend:
Ein beheizbarer länglicher Zylindermantel (22) mit einer Düse (12) an einer Spitze (122) davon; und eine Extrusionsschraube (20), die koaxial und drehbar an diesem Zylindermantel befestigt ist, so dass
bei einer Drehung dieser Schraube in diesem Zylindermantel ein Zusatzstoff herstellendes Baumaterial in diesem Zylindermantel in Richtung Spitze gedrückt wird;
diese Schraube darin eine axiale Bohrung (11) aufweist; und
mindestens ein längliches mechanisches Teil (13) für das steuerbare Variieren mindestens entweder einer Menge oder einer Art von Material, das durch diese Düse extrudiert wird,
**gekennzeichnet dadurch, dass** dieses mindestens eine längliche mechanische Teil
ein röhrenförmiges Element (16) umfasst, das koaxial in dieser Bohrung enthalten und axial darin beweglich ist, um diese Düse steuerbar ein- und auszuschalten.

2. Das System nach Anspruch 1, wobei das röhrenförmige Element mindestens eine Öffnung (18) umfasst, die in einem seiner Wände gebildet ist, damit das von dieser Schraube vorwärts gedrückte Baumaterial in das röhrenförmige Element durch diese mindestens eine Öffnung fließen kann, so dass, wenn diese Düse in dieses röhrenförmige Element eingekuppelt wird, die Düse mit dem Baumaterial aus dem röhrenförmigen Element gefüllt wird.

3. Das System nach Anspruch 2, wobei das mindestens eine mechanische Teil einen Stab (14) umfasst, der in dem röhrenförmigen Element steckt und axial darin und über diese mindestens eine Öffnung beweglich ist, um eine Menge eines Baumaterials, das durch diese mindestens eine Öffnung fließt, zu steuern.

4. Das System nach einem der Ansprüche 1-3, wobei, wenn diese Düse von dem röhrenförmigen Element abgekuppelt wird, diese Düse mit Baumaterial gefüllt wird, das dieses röhrenförmige Element umgeht.

5. Das System nach Anspruch 1, wobei dieses röhrenförmige Element eine Vielzahl von Lumen (42) umfasst, um eine Vielzahl von verschiedenen Arten von Zusatzstoffmaterialien darin zu leiten.

6. Das System nach Anspruch 1, wobei dieses röhrenförmige Element mindestens ein Ventil (38) umfasst, um mindestens eine Menge und eine Art von Zuschlagstoffmaterial, das in diese Düse geleitet wird, zu steuern.

## Revendications

1. Système d'extrusion pour fabrication additive, le système d'extrusion comprenant :
un cylindre allongé pouvant être chauffé (22) ayant une buse (12) au niveau d'un embout (122) de celui-ci ; et
une vis d'extrusion (20) montée de manière coaxiale et rotative dans ledit cylindre, de telle sorte que lors de la rotation de ladite vis dans ledit cylindre, un matériau de construction de fabrication additive soit avancé dans ledit cylindre en direction dudit embout ;
ladite vis comportant un alésage axial (11) ; et
au moins un élément mécanique allongé (13) pour faire varier de façon contrôlable au moins l'un parmi une quantité et un type de matériau extrudé à travers ladite buse,
**caractérisé en ce que** ledit au moins un élément mécanique allongé comprend
un élément tubulaire (16) disposé coaxialement à l'intérieur dudit alésage et pouvant s'y déplacer axialement pour engager et dégager de manière commandée ladite buse.

2. Système selon la revendication 1, dans lequel ledit élément tubulaire comprend au moins une ouverture (18) formée dans une paroi de celui-ci, pour permettre au matériau de construction avancé par ladite vis de pénétrer dans ledit élément tubulaire à travers ladite au moins une ouverture, de sorte que ledit élément tubulaire engage ladite buse, ladite buse étant alimentée en matériau de construction à partir dudit élément tubulaire.

3. Système selon la revendication 2, dans lequel ledit au moins un élément mécanique comprend une tige (14) ajustée dans ledit élément tubulaire et pouvant s'y déplacer axialement à l'intérieur et au-dessus de ladite au moins une ouverture pour commander une quantité de matériau de construction circulant à travers ladite au moins une ouverture.

4. Système selon l'une quelconque des revendications 1 à 3, dans lequel, lorsque ledit élément tubulaire est dégagé de ladite buse, ladite buse est alimentée par un matériau de construction contournant ledit élément tubulaire.

5. Système selon la revendication 1, dans lequel ledit élément tubulaire comprend une pluralité de passages (42) pour guider une pluralité de différents types de matériaux additifs à l'intérieur.

6. Système selon la revendication 1, dans lequel ledit élément tubulaire comprend au moins une soupape (38) pour commander au moins l'un parmi une quantité et un type de matériau additif guidé dans ladite buse.
